# EUROPEAN PATENT APPLICATION

(11) **EP 0 856 550 A1**
(43) Date of publication of application: **05.08.1998**
(21) Application number: 98100923.6
(22) Date of filing: 20.01.1998
(51) Int. Cl.: C08K 3/00, C08J 5/18, C08L 27/18, B32B 5/18

(54) **Antistatic textile material**

(30) Priority: 03.02.1997 JP 34332/97
(71) Applicant: W.L. GORE & ASSOCIATES, INC., Newark, Delaware 19714-9206 (US)
(72) Inventor: Yuichiro, Nozaki, Okayama-ken 700 (JP); Norimasa, Kato, Okayama-ken 703 (JP); Katashi, Kitaura, Wake-Gun, Okayama-Ken 709-02 (JP)
(74) Representative: Kador & Partner

(57) **Abstract**

An antistatic material is provided which employs a perforated film of porous polytetrafluoroethylene containing a conductive substance.

Antistatic material, characterized in that an insulating material layer is laminated to the conductive layer, and a resin layer can be laminated to the said conductive layer on the other side.

## Description

### FIELD OF THE INVENTION

This invention relates to material having static dissipation properties, for use in fabrics and clothing.

### BACKGROUND OF THE INVENTION

Clothing which has antistatic properties is desirable for wear, especially around locations where fire could ignite by static electricity, such as gasoline stations and the like.

Japanese Laid Open Utility Model Application No. 59-155125 describes a conductive porous polytetrafluoroethylene (PTFE) laminated to a fibrous fabric. The porous PTFE film is made conductive by the presence of a conductive material such as carbon particles. However, the product is brittle, resulting in tearing of the conductive layer, and the loss of antistatic properties.

Japanese Laid Open Utility Model Application No. 61-180119 teaches a coating layer of a resin containing conductive particles, which is on a porous expanded PTFE (ePTFE) film. A fabric base layer is present. The resin is not identified. Because of presence of the conductive particles, the ePTFE layer tends to have pinholes.

### SUMMARY OF THE INVENTION

It is an object of the invention to provide an improved antistatic material. The invention involves use of an expanded, porous PTFE film or membrane that contains a conductive substance, and which has perforations through it that can be irregularly or geometrically shaped.

In one aspect, this conductive layer can have a porous electrically-insulating layer on it.

In another aspect, the conductive layer with the insulating layer can have a resin layer on the other side.

In still another embodiment, the conductive layer only has a resin layer on it

In an additional embodiment, any of the above described combinations can form a part of a fabric textile or clothing.

### BRIEF DESCRIPTION OF THE DRAWINGS

Figure 1 is a micrograph of the antistatic material obtained in Practical Example 1 viewed from the resin layer C side.

Figure 2 is a micrograph of the antistatic material obtained in Practical Example 2 viewed from the resin layer C side.

### DETAILED DESCRIPTION OF THE INVENTION

The material of the invention has a conductive layer B consisting of a porous expanded PTFE that contains a conductive substance. Various conductive substances can be used, examples of which include carbon powder (such as carbon black, graphite, and activated carbon), carbon fibers, metal powders, metal fibers, and the like, and mixtures thereof. The mean particle diameter of the conductive substance is no more than 5 µm, and preferably no more than 3 µm, with no particular restrictions on the minimum value. The content of the conductive substance in the conductive layer is determined by taking into count the necessary antistatic properties, or the strength and the like which is diminished by the conductive substance. The use of a carbon powder with a mean particle diameter of 0.05 to 0.3 µm is preferred in the present invention. The content in the conductive layer is 1 to 50 wt%. and preferably 7 to 20 wt% of the total weight.

The conductive layer is 5 to 100 µm, and preferably 20 to 50 µm, thick.

The conductive layer B used in the present invention has perforations i.e., numerous through-holes or openings. The through-holes usually have an elliptical shape or other irregular shape. The mean dimensions of the through-holes are such that the diameter, when the through-hole is converted to a circle having the same surface area, is at least 0.5 cm, and usually 1 to 5 cm. The proportion of the through-hole surface area to the entire surface area of the conductive layer is at least 10%, and usually in the range of 50 to 80%.

The porosity of the conductive regions of the porous PTFE film containing the conductive substance, film B, is 50 to 80%, and preferably 50 to 65%, and the mean pore diameter in those regions is 0.1 to 1 µm, and preferably 0.1 to 0.3 µm.

The antistatic material having a laminated structure pertaining to the present invention can have an electrically-insulating material layer A. This material layer A can be a porous, foamed, or nonporous structure. The material of material layer A can include any of various well known electrically-insulating material such as thermoplastic resin, thermosetting resin, and fabric. Examples of thermoplastic resins include polytetrafluoroethylene, polyvinylidene fluoride, tetrafluoroethylene/vinyl compound copolymers and other such fluororesins, as well as polyester, polyamide, polyimide, polyolefin, polystyrene, polyvinyl chloride, polymethacrylate, polycarbonate, polyether ether ketones, and polysulfones. Examples of thermosetting resins include epoxy resins, phenolic resins, and unsaturated polyester resins. Examples of fabrics include woven, nonwoven, knitted, and other such fabrics consisting of fibers such as polyamide polyester, and polyolefin.

Layer A in the present invention preferably consists of porous polytetrafluoroethylene (PTFE). When the material layer consists of porous PTFE, the thickness is 5 to 100 µm, and preferably 20 to 50 µm, and the porosity is 65 to 85%, and preferably 76 to 80%. The mean pore diameter, as determined with Coulter porometer by Coulter Electronics, is 0.16 to 1 µm, and preferably 0.15 to 0.3 µm. Preferably, the porous PTFE is stretched porous PTFE (ePTFE) which can be prepared as described in Gore USP 3,953,566. The ePTFE is characterized by a microporus structure of nodes interconnected by fibrils.

The material of the present invention has a resin layer C. Part of resin forming layer C can penetrate into material layer A through the pores between the porous structure of conductive layer B or through the perforations (through-holes) of conductive layer B so that material layer A and conductive layer B form an integrally bonded structure by means of part of the resin contained in the resin layer C. The peel strength between material layer A and conductive layer B is thus dramatically increased.

Part of the resin in resin layer C penetrates into the pores between the conductive particles of conductive layer B. When porous PTFE contains a conductive substance, the strength deteriorates, tending to produce breaks and partial separation, but the penetration of the aforementioned resin C increases the strength of layer B. The proportion of the resin C penetrating into the conductive layer B is 1 to 100%, and preferably 20 to 70%, with respect to the thickness of the conductive layer B.

Resin layer C is formed as a continuous coating on conductive layer B. The thickness of the continuous coating is 3 to 50 µm, and preferably 5 to 20 µm, not including the impregnated portions in the conductive layer B or the material layer A.

The material of the present invention can also have a fabric on at least one surface. Examples of fabrics for such cases include woven, nonwoven, knitted, and other such fabrics consisting of polyolefin, nylon, polyesters, or the like, depending on the type of intended clothing.

Material A consisting of a thermoplastic and conductive layer B consisting of a conductive substance-containing PTFE are first prepared separately. Layer B can be obtained by adding and mixing a liquid lubricant (such as solvent naphtha or white oil) to a mixture of a conductive substance and a fine powder (crystallinity of at least 95%) of a polytetrafluoroethylene resin (PTFE) and extrusion molding the resulting mixture using an extruder by a common method. In this case, the content of the lubricant in the mixture is 12 to 25 wt%, and preferably 15 to 20 st%. The mean particle diameter of the PTFE fine powder is 400 to 700 µm, and preferably 450 to 550 µm. The extrusion temperature is 22 to 70°C, and preferably 25 to 50°C. Material A is 0.1 to 5 mm, and preferably 0.3 to 1 mm, thick, and layer B is 0.1 to 5 mm, and preferably 0.6 to 1.5 mm thick.

The mixture of conductive substance and fine powder is obtained by mixing PTFE dispersion with Ketjenblack carbon black particles in water and agitating the mixture. The mixture is cocoagulated. Water is removed, the resultant product is cooled, and the mixture thus obtained is pulverized.

Layer B is then superposed on one or both sides of Material A and calendered thereon. In this case, the sheets can be calendered by roll calendering. The number of calendering passes is usually in the range of 3 to 10. The calendering temperature is 20 to 70°C, and preferably 30 to 50°C. The increased length of the sheets due to calendering is 1.5 to 10 times, and preferably 3 to 5 times. Material A of the laminated sheet following calendering is 0.05 to 2 mm, and preferably 0.1 to 0.6 mm, thick, while layer B is 0.05 to 2 mm, and preferably 0.05 to 0.3 mm, thick. The ratio of the thickness of layer B to material A is 0.1 to 1.3, and preferably 0.2 to 0.5.

The aforementioned film laminate is then heated to a temperature at or beyond the boiling point of the lubricant contained in layer B, for example, 200 to 260°C, so that the lubricant is evaporated off, and the laminate is then drawn. This drawing treatment involves the use of conventional equipment for drawing sheets, either uniaxially or biaxially, at a temperature that is about 20 to 150°C, and preferably about 20 to 30°C, lower than the melting point of the PTFE. In this case, the drawing ratio is 1 to 50 times, and preferably 9 to 15 times. The drawn product is heated at a temperature of 350 to 380°C to fix the structure.

In the resulting drawn laminate, layer B is perforated, i.e., through-holes are created in film B, as a result of tearing caused by the drawing force.

In one aspect, layer B is then peeled from the drawn film laminate of A and B. This results in a conductive, porous PTFE layer B having perforations.

When perforated layer B is manufactured as described above, the perforated structure formed as a result of the drawing depends on the number of calenderings for obtaining the film laminate and on the surface configuration of the calendering rolls. When conventional smooth surface calendering rolls are used at least three, and preferably 3 to 6, calenderings are generally required. When calendering rolls having a textured surface such as embossing rolls are used, one or two calenderings can produce a calendered layer B that readily results in a sheet with a torn structure when drawn.

The shape and dimensions of the perforations formed in the drawn layer B depends on the surface configuration of the aforementioned rolls, the number of calenderings, and the drawing speed and draw ratio. Film B having the desired porosity can be obtained by setting those conditions.

Any thermoplastic plastic that is resistant to drawing, and that has heat resistance to prevent decomposition at the aforementioned firing temperature (350 to 380°C), can be used as the material for the material A. Examples of such plastics include fluororesins and liquid crystal polymers. A can have a nonporous or porous structure. When film B is to be separated from the drawn film laminate, use of a nonporous material A is preferred. When the drawn film laminate is used as antistatic material as it is without separating layer B from material A, a film with pores through it is used as material A, because A and B should be bonded with high adhesive strength.

Desirable examples of porous material A include PTFE films which have been obtained by the paste extrusion of a mixture of a liquid lubricant and a PTFE fine powder by a common method to fashion a film. This material A and the aforementioned conductive substance-containing layer B are placed on top of each other and subjected to the aforementioned calendering and drawing treatment to obtain an antistatic material consisting of a reticulated conductive layer and a porous material layer. Material A in this laminated film is 5 to 100 µm, and preferably 20 to 50 µm, thick, and layer B in this laminated film is 5 to 100 µm, and preferably 20 to 50, thick.. The ratio of the thickness of B to A is 0.05 to 20, and preferably 0.3 to 2.5.

Thus, a multilayered antistatic material can be obtained using the aforementioned perforated layer B. Layer B can be laminated and bonded to one or both sides of porous, material A. Various types of conventional materials such other porous or nonporous plastic films as well as fabrics (woven, nonwoven, knitted, and the like), ceramic sheets, and the like may be used in addition.

Examples of methods for laminating and bonding the various layers include methods in which a liquid adhesive is applied to the surface of the material layer, and the film B is then placed on it and bonded; methods in which an adhesive in the form of a film is placed on the surface of the material layer, the layer B is placed on that, and the layers are thermocompression bonded; and methods in which the layer B is placed on the material layer, a liquid adhesive or film adhesive is placed on the surface of the layer B, and the layers are bonded.

As described above, porous material A and layer B (PTFE film containing a conductive substance) can be placed on top of each other and calendered to obtain a film laminate consisting of porous material layer A and perforated conductive layer B. In this case, the adhesive strength between the material layer A and conductive layer B in the film laminate is not strong. The adhesive strength can be increased by forming a resin layer C on the other surface of the conductive layer B. The resin layer C can be formed by applying a coating solution (paint, adhesive, or the like) that contains a resin on the surface of the conductive layer B, or by laminating a resin film C to the surface of layer B. When resin layer C is thus formed on the surface of conductive layer B, part of the resin in resin layer C penetrates through the perforated openings (through-holes) of film B into the porous layer A. Layer A and conductive layer B are thus firmly bonded. When a resin layer C is thus formed on the surface of conductive particle-filled region of conductive layer B, because the conductive layer B is porous, part of the resin in the resin layer C penetrates into the holes between the conductive particles of conductive layer B. This improves the inherent strength of conductive layer B. When conductive layer B consists of only porous PTFE containing a conductive substance, the mechanical strength is weaker, and partial separation and breakage tend to occur; but, as described above, it's part of the resin in the resin layer C penetrates into the holes of conductive layer B, allowing such partial separation and breakage can be prevented.

The aforementioned resin layer C can be formed using a coating solution such as a resin-containing paint or adhesive, or a resin film. In this case, a water-vapor-permeable resin layer C can be formed using water vapor permeable resin as the resin. The antistatic material having a water vapor permeable resin layer C can ideally be used, for example, as clothing material with little stuffiness due to perspiration.

Water vapor permeable resins include thermosetting resins or thermoplastic resins containing hydrophilic groups such as amino groups, sulfonic acid groups, carboxyl groups, and hydroxyl groups. Examples of such water vapor permeable resins include polyurethane, polyfluorosulfonic acid resins, polyvinyl alcohols, cellulose acetate, cellulose nitrate, polyamino acid, hydrophilic fluoropolymers, and silicone resins. Water vapor-permeable resins or their prepolymers which have been dissolved or dispersed in an organic solvent or aqueous solvent can be used as the coating solution. The aforementioned water vapor-permeable resin used as a film-forming component in the present invention should be a setting or cross-linking resin or prepolymer thereof. When a coating solution containing such a resin and a curing agent for it is used, the solution is applied onto the conductive layer and is then cured by heat or the like. This allows a cured resin to be formed. Such a cured product has better physical properties such as water resistance and mechanical strength. The use of a water-vapor-permeable, liquid water resistant polyurethane resin-based coating composition is particularly preferred in the present invention. The preferred coating solution is a thermosetting material consisting of a curing agent and a polyurethane prepolymer obtained by a reaction between a polyol and a polyisocyanate. In this case, a polyoxyethylene glycol, a polyoxyalkylene polyol, or the like may be used as the polyol. Diols or diamines may be used as the curing agent. A coating solution including a wet curing type of hydrophilic polyurethane resin can also be used.

When material layer A of laminated antistatic material of the present invention consists of a porous plastic film, a fabric can be laminated and fixed to the surface of material layer A or to both the surface of material layer A and resin layer C. The fabric can be laminated and fixed by using an adhesive by a heat treatment, by sewing method, or the like. When adhesion is by use of an adhesive, the adhesive is preferably one that consists of a water vapor permeable resin. A partial fusion method can be used when the materials are laminated and fixed by fusion. To prevent rain water from penetrating the sewing holes when the materials are laminated and fixed by sewing, waterproof seam tape can be applied at those parts.

Electricity is removed from charged antistatic material by conduction or self-discharge. Electricity is removed by conduction when other objects come into contact with conductive layer B and electricity is removed by self-discharge when the atmosphere comes into contact with conductive layer B.

When an air-impermeable resin layer C or the like is laminated and bonded to both sides of conductive layer B, resulting in the complete obstruction of contact between conductive layer B and the atmosphere, self-discharge of the conductive layer B becomes less likely. To allow the atmosphere to come into contact with conductive layer B in such cases, pinholes can be formed in layer C to allow air to pass through the conductive layer B, the surface of conductive layer B can be textured to allow air to advance into the surface of conductive layer B, or a resin layer C can be formed into a discontinuous layer to allow conductive layer B to come into contact with the atmosphere, so as to facilitate self-discharge in conductive layer B.

The present invention is described with reference to the practical examples below.

### Practical Example 1

30 weight parts solvent naphtha was mixed as a liquid lubricant per 100 weight parts PTFE fine powder, the mixture was then ram extruded to obtain a sheet extrudate 0.75 mm thick x 154 mm wide and then calendered to obtain a PTFE resin film (film A) 0.7 mm thick x 155 mm wide.

Separately from this, a carbon black-containing PTFE resin was obtained by mixing 12 wt% carbon black (tradename: Ketjen Black, by Lion Aguzo) having a mean particle diameter of 3 µm as the conductive material with a PTFE dispersion (from Mitsui Fluorochemical) having a resin concentration of 25 to 30% by weight and then coprecipitating the materials. 50 weight parts of the same solvent naphtha as that used to manufacture material A was mixed as a liquid lubricant per 100 weight parts solids, and the mixture was then ram extruded to form a sheet extrudate 0.8 mm thick x 144 mm wide, and then calendered three times to form a film B 0.2 mm thick x 160 mm wide..

Material A and layer B were then superposed and calendered three times to obtain a laminated film 0.3 mm in thickness. Material A of the laminated film was 0.22 mm thick, and layer B was 0.08 mm thick.

The resulting laminated film was heated to 200°C to remove the liquid lubricant, then preheated to 260°C, drawn in the widthwise direction at a drawing rate of 100%/sec and a draw ratio of 10 times, and then heated at 375°C to obtain a laminated film having a porous structure. Thickness measurements are reported in Table 1.

A solution containing a polyurethane prepolymer (tradename: Hypol FHP3000, by Hampshire Chemical Corporation) and a diamine-based curing agent was then applied to the film B side of the drawn film laminate to form water-vapor-permeable, liquid-water-resistant resin layer C. Some of the resin impregnated into the laminated film, and the laminate was then heated to 200°C to cure the resin. The antistatic material thus produced had a continuous non-porous cured coating laydown of 12g/m². An electron micrograph of a cross section of the material revealed that resin C had penetrated through the film B into part of the film A.

Numerous through holes were present in the conductive layer because of its perforated structure. The porosity of conductive layer B was about 65 %. The thickness of the conductive layer and of the base layer at seven points (points a through g) on the surface was measured. The results are given in Table 1.

Figure I is a micrograph of the aforementioned antistatic material viewed from the resin layer C side. The longitudinal direction of the photograph is the drawing direction. The empty white parts are the perforated openings (through holes) formed in conductive layer B.

**Table 1**

| Measuring Point | Material layer thickness A (µm) | Conductive layer thickness B (µm) | B/A |
|---|---|---|---|
| a | 30 | 50 | 1.7 |
| b | 25 | 50 | 2.0 |
| c | 30 | 30 | 1.0 |
| d | 20 | 55 | 2.8 |
| e | 28 | 37 | 1.3 |
| f | 39 | 16 | 0.4 |
| g | 25 | 40 | 1.6 |

There was substantial adhesive strength between the material and conductive layers of the antistatic material pertaining to the present invention, with a peel strength of 500 g/3 cm when the conductive layer was peeled from the base layer. The friction electrostatic charge of the material, as determined by JIS L 1094, was 3 µC/m², indicating- good antistatic properties.

The aforementioned peel strength was measured in the following manner.

3 cm wide adhesive tape (M442 masking tape by Nashua) was applied to the surface of the resin layer of laminated sheet samples, and the tape was then pulled back 180 degrees at a rate of 200 mm/min. The strength needed to separate the conductive layer was used as the peel strength (g/3 cm).

Since layer A is made of porous expanded PTFE the antistatic material of this example is resistant to penetration of liquid water but is water vapor permeable. Since layer C is water vapor permeable but resistant to liquid water, it possesses the same properties and in addition, is impermeable to most gases.

### Practical Example 2

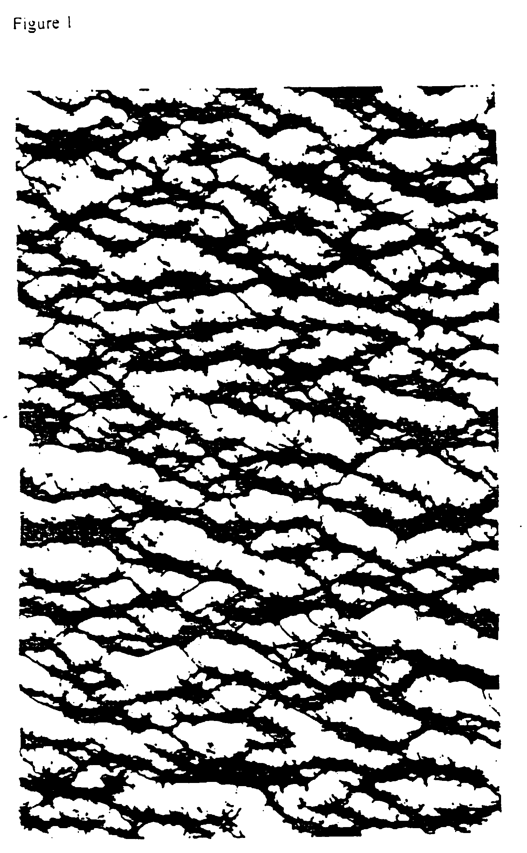

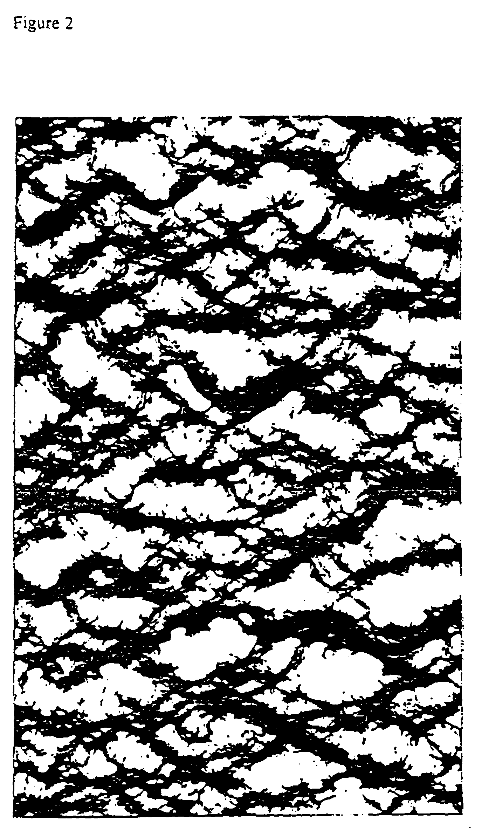

The procedure was the same as in Practical Example 1 except that the laminate of films A and B was calendered six times. In this case, the porosity of the drawn film B was 70%. Figure 2 is a photograph, similar to that shown in Figure 1, of the antistatic material obtained in Practical Example 2.

### Comparative Example 1

The laminated film, just before the formation of the water vapor permeable resin layer obtained in Practical Example 1, was measured for peel strength, and it was 150 g/3 cm.

The antistatic material of the present invention which consists of a perforated, porous polytetrafluoroethylene film containing a conductive substance can be laminated and bonded to the surface of various types of insulating materials to prevent the surface of said insulating materials from becoming charged.

The antistatic material of the present invention which consists of an electrically-insulating material layer and an electrically-conductive layer can ideally be used as conductive sealants. for example.

The antistatic material of the present invention which consists of an insulating-material layer, conductive layer, and resin layer has excellent antistatic properties, and can thus be used advantageously as antistatic materials, structural materials, or the like. Laminated antistatic materials of the present invention which have a fabric on at least one surface and which are water-vapor-permeable are particularly useful for clothing materials used in locations where there is concern over fire caused by static electricity (such as gasoline stands).

## Claims

1. An antistatic material comprising expanded porous PTFE having an antistatic substance in its pores and having perforations through the material.

2. The material of claim 1 laminated to a layer of expanded, porous PTFE that has no antistatic substance on at least one side.

3. The material of claim 2 which is laminated on the other side of the antistatic PTFE, with layer of a plastic resin.

4. The material of claim 3 in which the plastic resin is a water vapor permeable, liquid water resistant polyurethane.

5. The material of claim 4 wherein the plastic resin is also present in the pores of the conductive substance containing porous PTFE.

6. The material of claim 5 wherein the plastic resin is also present in the pores of the porous PTFE that has no conductive substance in it.
